# EUROPEAN PATENT APPLICATION

(11) **EP 4 524 857 A1**
(43) Date of publication of application: **19.03.2025**
(21) Application number: 24192967.8
(22) Date of filing: 05.08.2024
(51) Int. Cl.: G06Q 20/10, G06Q 20/40

(54) **PAYMENT SYSTEM FOR SUPPORTING SPLIT PAYMENT AND METHOD FOR PERFORMING SPLIT PAYMENT THEREOF**

(30) Priority: 15.09.2023 KR 20230123142
(71) Applicant: Travel-Wallet Co., Ltd., Seoul 06193 (KR)
(72) Inventor: KIM, Hyung Woo, 06281 Seoul (KR)
(74) Representative: Stolmár & Partner Patentanwälte PartG mbB

(57) **Abstract**

The present invention provides a payment system for supporting a split payment and a method for performing a split payment in the payment system. The method includes: generating split payment information for splitting a single payment amount with one or more other electronic devices to make a payment; transmitting the split payment information to a payment service server for providing a payment service; receiving a payment request; checking whether the received payment request is a split payment request; when the received payment request is the split payment request, checking whether the split payment is possible; and if the split payment is possible, performing the split payment based on the split payment information, and when the split payment is completed, respectively transmitting a notification about completion of the split payment to the electronic device and one or more other electronic devices.

## Description

### [BACKGROUND OF THE INVENTION]

### 1. Field of the Invention

The present invention relates to a payment system for supporting a split payment and a method for performing a split payment in the payment system.

### 2. Description of the Related Art

In the case of gatherings (such as a club, school reunion, alumni association, social gathering, etc.), it is common for a number of persons who participate in the gathering to collect money and pay the expenses incurred for the gathering. In addition, the Dutch pay or Dutch treat (hereinafter, a split payment) culture of calculating meal costs individually has become popular recently among office workers. For example, it is possible to collect cash from the people gathered there before the calculation, or pay the expenses by one of the people gathered with his or her credit card (or cash, check card, etc.), and then charge the other people separately.

However, the above methods may cause inconvenience to users. For example, as the use of credit cards becomes more common, many people do not carry cash, which may make it difficult to collect cash. Meanwhile, in order to separately charge other people later, the payer may have the inconvenience of having to provide his or her bank account information to the other people, and the inconvenience of having to urge people who have not deposited the share of expenses to deposit it.

Meanwhile, a card terminal (e.g., a POS device) for supporting a split payment is being provided. For example, a partial amount to be made a split payment out of the total payment amount may be input in the card terminal, and a user can touch or insert his or her card to recognize information thereof and pay the corresponding amount. However, this method has the inconvenience of having to perform the payment as many times as the number of split payments. For example, when making a split payment for meal costs of 4 users, each of the 4 users should make the payment. Accordingly, there is an inconvenience in that the split payment performed through the card terminal takes a lot of time for the entire payment.

Therefore, there is a need for a split payment method that can solve the above-described problems and/or inconveniences.

### [SUMMARY OF THE INVENTION]

In order to solve the above-described problems, it is an object of the present invention to provide a payment system for supporting a split payment, which allows users to perform a split payment by checking whether the split payment is possible based on split payment information when a split payment is requested by an electronic device of a representative, and a method for performing a split payment in the payment system.

Another object of the present invention is to provide a payment system for supporting a split payment, which checks whether the split payment is possible based on split payment information, and if the split payment is not possible in a user, may notify the corresponding user of a reason for payment impossibility, and a method for performing a split payment in the payment system.

The technical problems of the present invention are not limited to those described above, and other technical problems not described above will be clearly understood by those skilled in the art from the following descriptions.

To achieve the above objects, according to an aspect of the present invention, there is provided a method for performing a split payment in a payment system, which includes: generating, by an electronic device, split payment information for splitting a single payment amount with one or more other electronic devices to make a payment; transmitting, by the electronic device, the split payment information to a payment service server configured to provide a payment service; receiving a payment request by the payment service server; checking whether the received payment request is a split payment request by the payment service server; when the received payment request is the split payment request, checking whether the split payment is possible by the payment service server; and if the split payment is possible, performing the split payment by the payment service server based on the split payment information, and when the split payment is completed, respectively transmitting, by the payment service server, a notification about completion of the split payment to the electronic device and the one or more other electronic devices.

The method may further include, if the split payment is not possible, by the payment service server, notifying the electronic device of impossibility of the split payment, and transmitting a notification about the payment impossibility state and a reason for the impossibility to at least one electronic device which is unable to make the split payment.

The method may further include creating, by the electronic device, a split payment group by inviting the one or more other electronic devices which will perform the split payment, and the step of generating split payment information may include respectively setting a payment rate or a payment amount for each group member included in the split payment group.

The step of generating split payment information may include: checking, by the electronic device, whether the split payment information is approved by the one or more other electronic devices; and when all of the one or more other electronic devices approve the split payment, determining the split payment information by the electronic device.

The method may further include requesting, by the one or more other electronic devices, for the electronic device to adjust the payment rate or the payment amount.

The step of performing a split payment may include: generating single payment information for the split payment; and based on the split payment information, withdrawing or charging the corresponding payment amount from each electronic device to complete the split payment, and generating payment approval information for the single payment information.

The step of performing a split payment may include: based on the split payment information, generating sub-payment information for each electronic device; and withdrawing or charging the payment amount corresponding the sub-payment information from each electronic device to complete the split payment, and respectively generating payment approval information for the sub-payment information.

According to another aspect of the present invention, there is provided a method for performing a split payment in a payment system, which includes: generating, by an electronic device, split payment information for splitting a single payment amount with one or more other electronic devices to make a payment; transmitting, by the electronic device, the split payment information to a payment service server configured to provide a payment service; receiving a payment request by a payment terminal; transmitting the payment request to the payment service server by the payment terminal; checking whether the received payment request is a split payment request by the payment service server; when the received payment request is the split payment request, checking whether the split payment is possible by the payment service server; if the split payment is possible, performing the split payment by the payment service server based on the split payment information, and when the split payment is completed, respectively transmitting, by the payment service server, a notification about completion of the split payment to the electronic device and the one or more other electronic devices; and if the split payment is not possible, by the payment service server, notifying the electronic device of impossibility of the split payment, and transmitting a notification about the payment impossibility state and a reason for the impossibility to at least one electronic device which is unable to make the split payment.

In addition, according to another aspect of the present invention, there is provided a method for performing a split payment in a payment system, which includes: generating, by an electronic device, split payment information for splitting a single payment amount with one or more other electronic devices to make a payment; transmitting, by the electronic device, the split payment information to a payment service server configured to provide a payment service; checking whether the split payment is possible by the payment service server in response to receiving the split payment information; if the split payment is possible, notifying the electronic device of performance of the split payment by the payment service server; receiving a payment request by the payment service server; checking whether the received payment request is a split payment request by the payment service server; when the received payment request is the split payment request, performing the split payment by the payment service server based on the split payment information; and when the split payment is completed, respectively transmitting, by the payment service server, a notification about completion of the split payment to the electronic device and the one or more other electronic devices.

Further, according to another aspect of the present invention, there is provided a payment system for supporting a split payment, which includes: an electronic device configured to generate split payment information for splitting a single payment amount with one or more other electronic devices to make a payment; and a payment service server configured to: in response to receiving a payment request from the electronic device, check whether the received payment request is a split payment request; when the received payment request is the split payment request, check whether the requested split payment is possible; if the split payment is possible, perform the requested split payment based on the split payment information; and when the split payment is completed, transmit a notification about completion of the split payment to the electronic device and the one or more other electronic devices.

The payment service server may, if the split payment is not possible, notify the electronic device of impossibility of the split payment, and transmit a notification about the payment impossibility state and a reason for the impossibility to at least one electronic device which is unable to make the split payment.

The electronic device may create a split payment group by inviting the one or more other electronic devices which will perform the split payment, and respectively set a payment rate or a payment amount for each group member included in the split payment group to generate the split payment information.

The electronic device may inquire the one or more other electronic devices whether to approve the split payment information, and when all of the one or more other electronic devices approve the split payment, determine the split payment information.

The one or more other electronic devices may request for the electronic device to adjust the payment rate or the payment amount.

The payment service server may generate single payment information for the split payment, withdraw or charge the corresponding payment amount from each electronic device to complete the split payment based on the split payment information, and generate payment approval information for the single payment information.

The payment service server may, based on the split payment information, generate sub-payment information for each electronic device, withdraw or charge the payment amount corresponding the sub-payment information from each electronic device to complete the split payment, and respectively generate payment approval information for the sub-payment information.

Embodiments of the present invention may improve the convenience of users by efficiently performing split payments. For example, the present invention allows users to perform the split payment smoothly by checking whether the split payment is possible based on split payment information, and if the split payment is not possible in a user, notifying the user of a reason for the impossibility and inducing the corresponding user to quickly resolve the reason for the impossibility. In addition, the present invention allows the users to generate payment approval information for each member of a split payment group, thereby canceling the split payment respectively, or easily changing the payment card.

The effects of the present invention are not limited to the effects described above, and other effects not described above will be clearly understood by those skilled in the art from the descriptions of the claims.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a block diagram illustrating the configuration of a payment system according to an embodiment of the present invention;
FIG. 2 is a flowchart illustrating a method for performing a split payment in a payment system according to an embodiment of the present invention;
FIG. 3 is a flowchart illustrating a method for performing a split payment in a payment system according to another embodiment of the present invention;
FIG. 4A is a block diagram for describing a method of generating payment approval information according to an embodiment of the present invention;
FIG. 4B is a block diagram for describing a method of generating payment approval information according to another embodiment of the present invention;
FIGS. 5A to 5C are exemplary diagrams of screens for creating a split payment group according to an embodiment of the present invention;
FIGS. 5D to 5G are exemplary diagrams of screens for setting a split payment amount according to an embodiment of the present invention; and
FIGS. 5H and 5I are exemplary diagrams of screens for notifying a split payment history according to an embodiment of the present invention.

### [DETAILED DESCRIPTION OF THE INVENTION]

The above and other aspects, features, and advantages of the present invention will become apparent from the detailed description of the embodiments to be described in detail below in conjunction with the accompanying drawing. In this regard, it should be understood that the present invention is not limited to the following embodiments and may be embodied in various different ways, and that the embodiments are given to provide complete invention of the present invention and to provide a thorough understanding of the present invention to a person who has a common knowledge in the technical field to which the present invention belongs. The present invention is defined only by the scope of the claims. Hereinafter, the same reference numerals are denoted to the same components.

Although a first, a second, and the like are used to describe various elements, components and/or sections, these elements, components and/or sections are of course not limited by these terms. These terms are merely used to distinguish one element, component and/or section from another element, component and/or section. Therefore, it goes without saying that the first element, first component or first section mentioned below may also be the second element, second component or second section within the technical spirit of the present invention.

Terms used herein are for the purpose of describing particular embodiments only and are not intended to limit the present disclosure thereto. As used herein, singular forms are intended to include the plural forms as well, unless the context clearly indicates otherwise. It will be further understood that the terms "comprises" and/or "comprising," as used herein, do not preclude the presence or addition of one or more components, steps, operations and/or elements other than those mentioned component, step, operation and/or element

Unless otherwise defined, all terms (including technical and scientific terms) used herein have the same meaning as commonly understood by one of ordinary skill in the art to which the present disclosure pertains. Terms, such as those defined in commonly used dictionaries, are not to be construed in an idealized or overly formal sense unless expressly so defined herein.

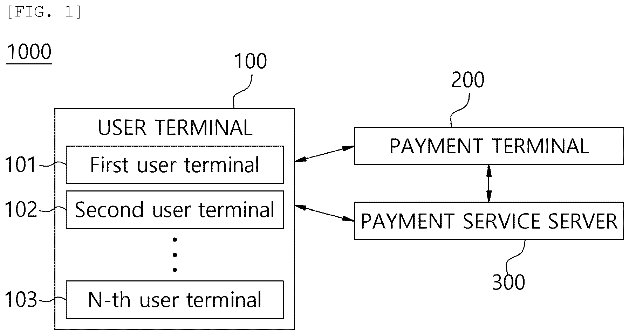

FIG. 1 is a block diagram illustrating the configuration of a payment system according to an embodiment of the present invention.

Referring to FIG. 1, a payment system 1000 according to an embodiment of the present invention may support a split payment (e.g., Dutch pay) service of splitting a single payment amount with a plurality of users to make a payment other than a general payment. The system 1000 may include a user terminal (e.g., an electronic device) 100, a payment terminal 200, and a payment service server 300.

The user terminal 100 may be an electronic device (such as a smart phone, smart watch, etc.) equipped with an online/offline payment function. The user terminal 100 may include an application (such as an electronic wallet, mobile card, etc.) which manages/controls the payment function.

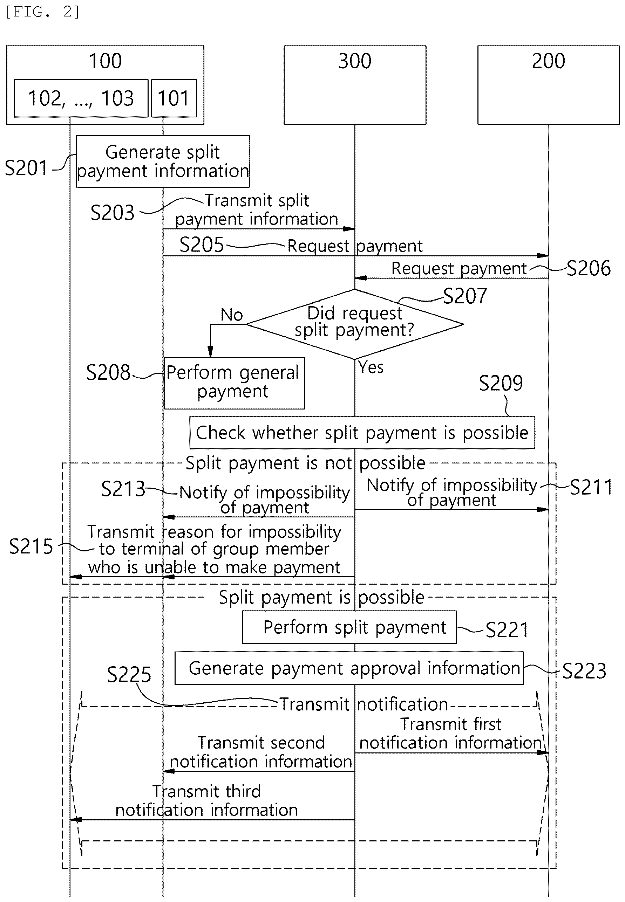

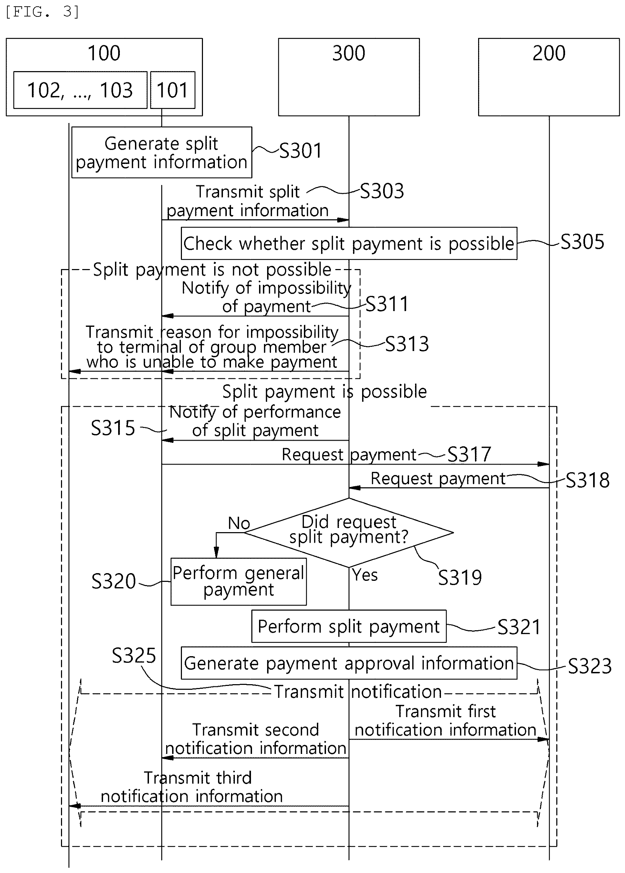

The user terminal 100 may be a terminal of a group member (or personnel) of a group (or organization) for split payment. That is, the user terminal 100 may include a plurality of user terminals 101, 102 and 103. The user terminal 100 may support split payments among the payment services. For example, one terminal (e.g., a first user terminal 101) of the plurality of user terminals 101, 102 and 103 may be a representative terminal, and create a split payment group by inviting at least one of one or more other user terminals (e.g., a second user terminal 102 to an N-th user terminal 103). After creating the split payment group, the first user terminal 101 may perform a split payment by generating split payment information. Specific operations of the user terminal 100 for performing the split payment will be described in detail below with reference to FIGS. 2 and 3.

The payment terminal 200 may receive a payment request (e.g., a general payment or split payment request) from the first user terminal 101, transmit it to the payment service server 300, and receive a message about payment approval or failure from the payment service server 300. The payment terminal 200 may be a card terminal (e.g., a POS device) installed in an offline store (e.g., an affiliate). Alternatively, the payment terminal 200 may be payment software (e.g., a payment application) for online payment.

The payment service server 300 may support the payment service of the user terminal 100. The payment service server 300 may be a third party server to provide the payment service using a network connected to a card company server. For example, the payment service server 300 may be connected to the user terminal 100 and the payment terminal 200 through the network connected to the card company server, the Internet and Intranet, a wired and wireless communication network, a mobile communication network, etc., receive a payment request from the first user terminal 101 through the payment terminal 200, and process the received payment request. In addition, the payment service server 300 may store information of a service subscriber (e.g., information on at least one payment card held by the subscriber, charge account information, etc.) in a database.

The payment service server 300 according to an embodiment may support split payments. For example, the payment service server 300 may receive split payment information (e.g., group members, a total payment amount, split payment amounts for each group member, payment means for each group member, etc.) from the first user terminal 101, and check whether the split payment is possible based on the split payment information. If the split payment is possible, the payment service server 300 may perform the split payment by withdrawing (or charging) the split payment amount for each group member, and notify the group members of the completion of split payment (e.g., transmit a split payment history to each group member terminal as a message).

Meanwhile, if the split payment is not possible, the payment service server 300 may notify the first user terminal 101 of the impossibility of split payment. In this case, the payment service server 300 may notify the user terminal of a group member who is unable to make the payment and/or a reason for the impossibility together. In addition, the payment service server 300 may transmit the reason for payment impossibility (e.g., insufficient balance, exceeding a credit limit) to the terminal of a group member who is unable to make the split payment, thus to induce resolution of the reason. Specific operations of the payment service server 300 for the above-described split payment will be described in detail below with reference to FIGS. 2 and 3.

Meanwhile, although not shown in the drawings, the payment service server 300 may provide a payment service in conjunction with the card company server. For example, the payment service server 300 may store card information of other card companies through various known methods, and charge the corresponding card company for the split payment amount using the stored card information. In addition, when requesting a split payment, the payment service server 300 may inquire the corresponding card company whether payment for the split payment amount is possible and receive results thereof.

FIG. 2 is a flowchart illustrating a method for performing a split payment in a payment system according to an embodiment of the present invention.

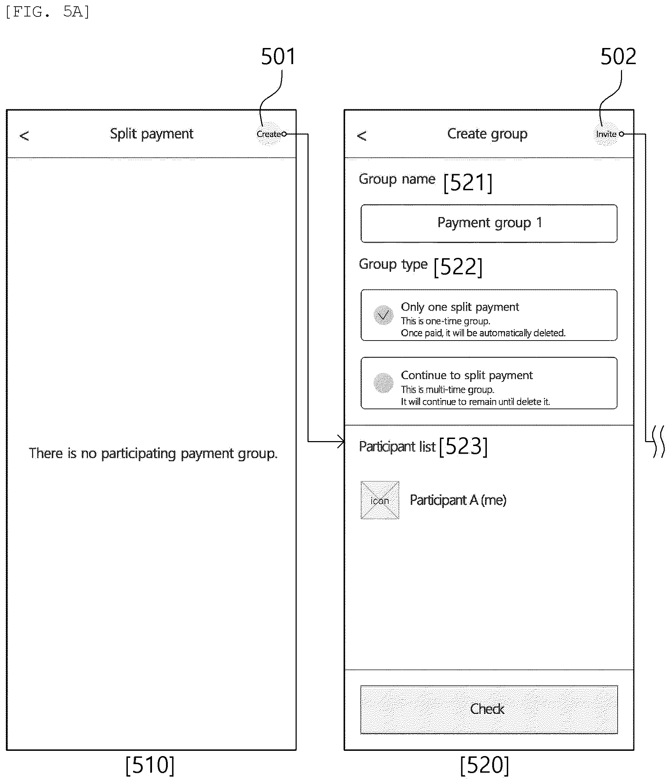

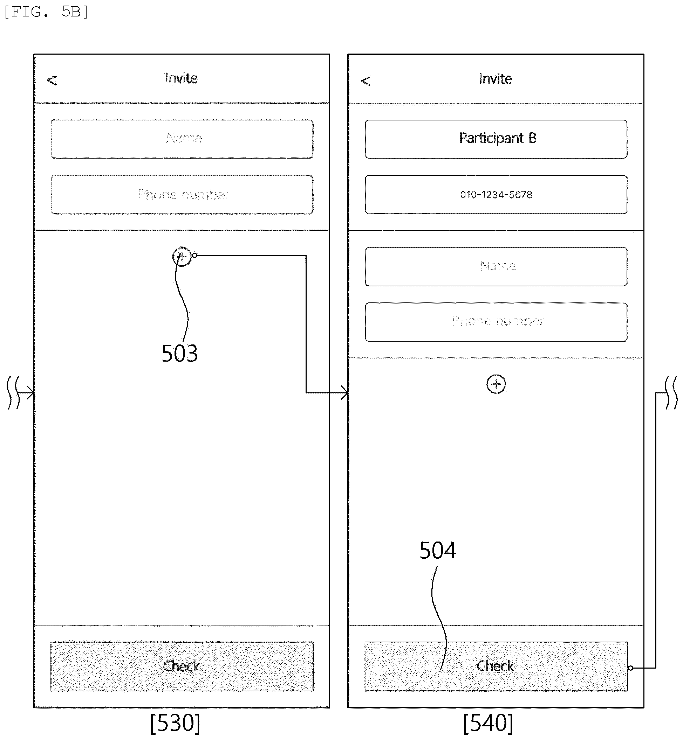

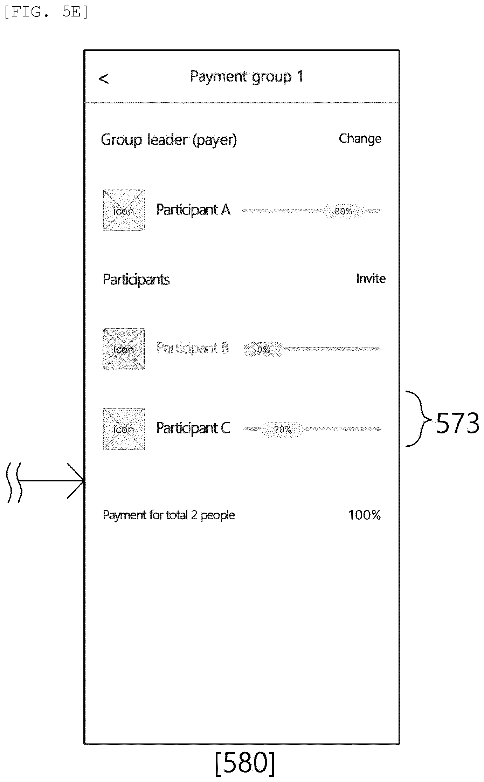

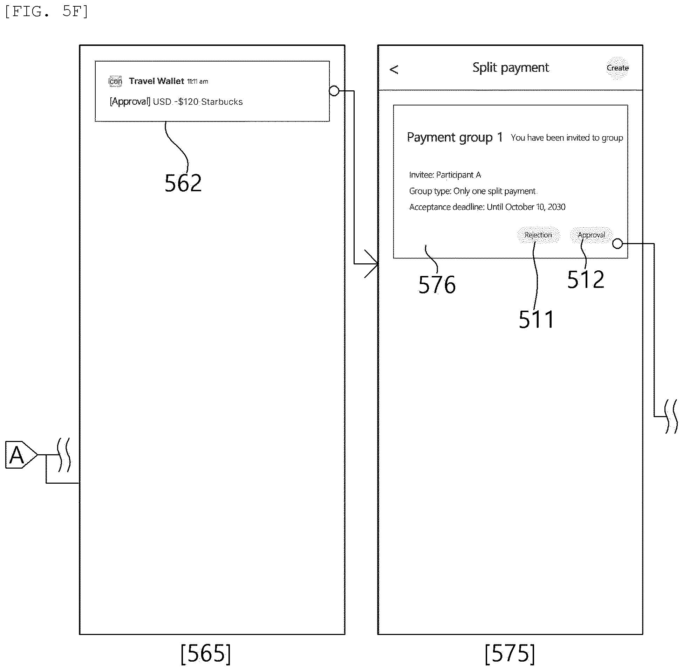

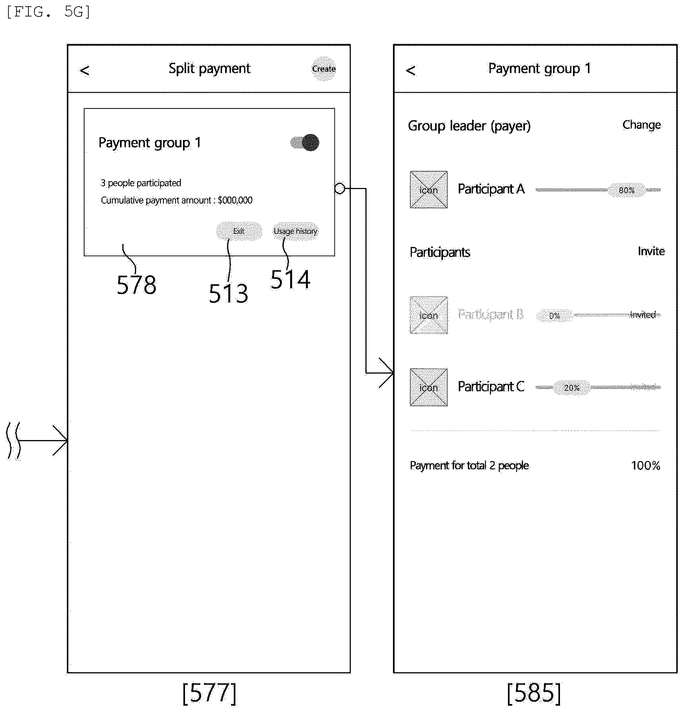

Referring to FIG. 2, the method for performing a split payment in the payment system according to an embodiment of the present invention (hereinafter, a split payment method) may generate split payment information in step S201. For example, an electronic device (e.g., the first user terminal 101) may generate split payment information to perform a split payment of a single payment with one or more other electronic devices (e.g., the second user terminal 102 to N-th user terminal 103). The split payment information may include group members which will perform a split payment, a total payment amount, and a split payment amount (or rate) for each group member. Specifically, a user of the electronic device may create a split payment group by selecting one of the preset groups or inviting at least one user of other electronic devices, and generate split payment information by setting a payment amount or a payment rate for each group member to the total payment amount. Specific procedures of this process will be described in detail below with reference to FIGS. 5A and 5B.

In the split payment method, the split payment information may be transmitted to the payment service server 300 in step S203. For example, the electronic device may transmit the split payment information to the payment service server 300 using a wired or wireless communication network. As another example, the electronic device may also transmit the split payment information to the payment service server 300 through the payment terminal 200.

In the split payment method, the user of the electronic device may request a payment to the payment service server 300 through the payment terminal 200 using his or her electronic device in steps S205 and S206. For example, if the payment terminal 200 is a POS device, the POS device may transmit a payment request to the payment service server 300 when the user of the electronic device touches the POS device with his or her electronic device (or approaches within a predetermined distance). As another example, if the payment terminal 200 is a payment application, the payment application may transmit a payment request to the payment service server 300 when a payment button on the payment screen is activated (e.g., clicked) by the user. The payment request may include the total payment amount and identification information (e.g., card number).

In the split payment method, it may be checked whether the requested payment is a split payment request in step S207. For example, the payment service server 300 may check whether the requested payment is a split payment request based on the split payment information. For example, after receiving the split payment information from the electronic device, the payment service server 300 may determine that the payment request received from the electronic device is the split payment request.

If the requested payment is not the split payment request, in the split payment method, the general payment may be performed in step S208. On the other hand, if the requested payment is the split payment request, in the split payment method, it may be checked whether the split payment is possible in step S209. For example, the payment service server 300 may check whether the split payment is possible based on the received split payment information. For example, the payment service server 300 may check whether the balance is the split payment amount or more if the payment means of the group member is a prepaid charge card (or account), and check whether the remaining credit limit is the split payment amount or more if the payment means of the group member is a credit card.

If the split payment is not possible as a result of the check in step S209, the payment service server 300 may notify the payment terminal 200 of the impossibility of payment in step S211. In addition, in the split payment method, the payment service server 300 may notify the electronic device of the impossibility of payment in step S213. In this case, the payment service server 300 may notify of (transmit) a group member who is unable to make the payment and the reason for the impossibility together. Further, in the split payment method, the payment service server 300 may transmit the reason for the impossibility to the terminal of the group member who is unable to make the payment in step S215. Through steps S213 and S215, the group members may act to quickly resolve a situation in which the split payment is not possible (e.g., by charging the balance of the prepaid charge card (or account), increasing the credit limit of the credit card, requesting to adjust the split payment amount (or rate), changing the payment card (or account), etc.), thereby improving the convenience of the split payment.

According to another embodiment, the payment service server 300 may transmit information on at least one card capable of making a payment among cards held by the group member who is unable to make the payment together, when transmitting the reason for impossibility. According to another embodiment, when a group member sets automatic charge, the payment service server 300 may automatically charge a payment card with insufficient balance, and transmit an automatic charge message for notifying that the corresponding card is automatically charged to the corresponding group member terminal.

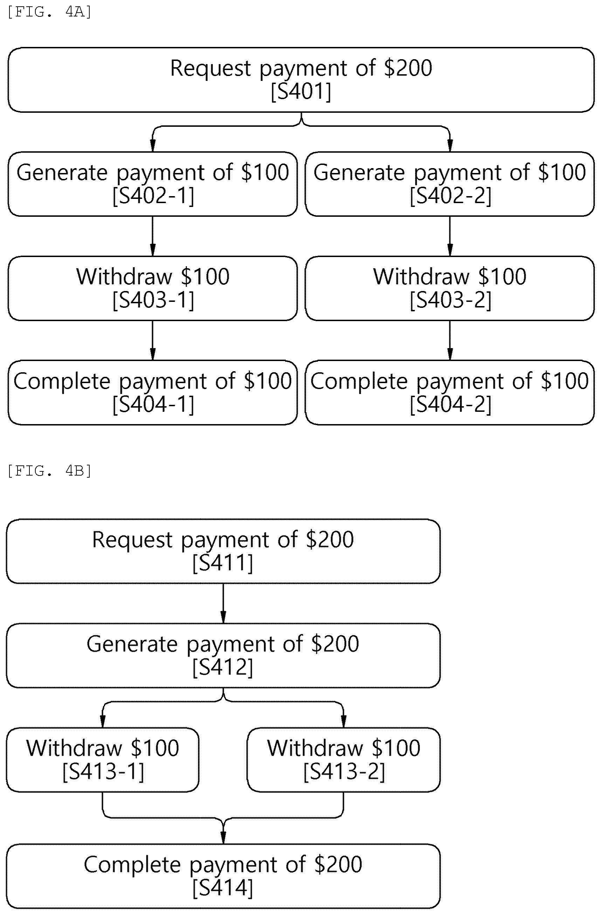

Meanwhile, if the split payment is possible as a result of the check in step S209 (or if all reasons for payment impossibility are resolved after step S215), in the split payment method, the split payment may be performed based on the split payment information in step S221. For example, the payment service server 300 may withdraw (or charge) the payment amount for each group member based on the split payment information. In the split payment method, payment approval information may be generated in step S223. In this case, the payment service server 300 may respectively generate payment approval information for each group member, which will be described in detail below with reference to FIG. 4A. As another example, the payment service server 300 may generate only one payment approval information for the total amount even if individual payment amounts are withdrawn for each group member, which will be described in detail below with reference to FIG. 4B.

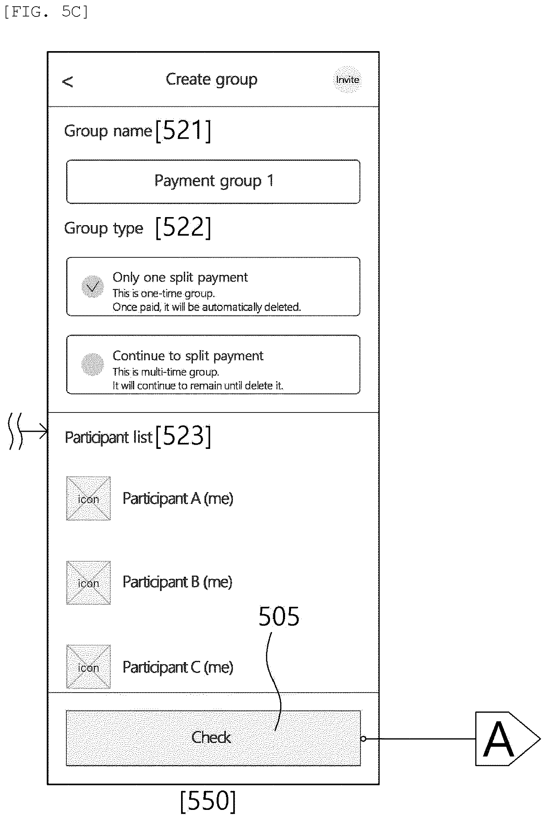

In the split payment method, a notification may be transmitted in step S225. For example, the payment service server 300 may transmit first notification information (e.g., payment approval) to the payment terminal 200, transmit second notification information (e.g., a split payment approval history) to the electronic device, and transmit third notification information (e.g., a split payment approval history) to one or more other electronic devices, which will be described in detail below with reference to FIG. 5C.

Meanwhile, although not shown in the drawings, when checking whether the split payment is possible in step S209, the payment service server 300 may compare the total payment amount transmitted from the payment terminal 200 with the total payment amount included in the split payment information received from the electronic device, thus to check whether the split payment is possible. This is to prevent a payment error which may occur due to an incorrect input of the total payment amount by the user of the electronic device when generating split payment information.

FIG. 3 is a flowchart illustrating a method for performing a split payment in a payment system according to another embodiment of the present invention.

Referring to FIG. 3, the method for performing a split payment in the payment system according to another embodiment of the present invention (hereinafter, a split payment method) is similar to the split payment method described in FIG. 2. However, in the split payment method shown in FIG. 3, the payment service server 300 may check whether the split payment is possible before the user of the electronic device actually requests a split payment to the payment terminal 200 using his or her electronic device.

In the split payment method, split payment information may be generated in step S301. In the split payment method, the split payment information may be transmitted to the payment service server 300 in step S303. According to the split payment method, it may be checked whether the split payment is possible in step S305. The steps S301, S303 and S305 are similar to the steps S201, S203 and S209 shown in FIG. 2, and therefore will not be described in detail.

If the split payment is not possible as a result of the check in step S305, in the split payment method, the payment service server 300 may notify the electronic device of the impossibility of split payment in step S311, and transmit the reason for the impossibility to the terminal of a group member who is unable to make the payment in step S313. The steps S311 and S313 are similar to the steps S213 and S215 shown in FIG. 2, and therefore will not be described in detail.

Meanwhile, if the split payment is possible as a result of the check in step S305, in the split payment method, the payment service server 300 may notify the electronic device of the performance of the split payment in step S315.

In the split payment method, the user of the electronic device may request a payment to the payment service server 300 through the payment terminal 200 using his or her electronic device in steps S317 and S318. The steps S317 and S318 are similar to the steps S205 and S206 shown in FIG. 2, and therefore will not be described in detail.

In the split payment method, it may be checked whether the requested payment is a split payment request in step S319. If the requested payment is not the split payment request, in the split payment method, the general payment may be performed in step S320. On the other hand, if the requested payment is the split payment request, in the split payment method, the payment service server 300 may perform the split payment based on the split payment information in step S321, generate payment approval information in step S323, and transmit a notification about the approval in step S325. The steps S319, S320, S321, S323 and S325 are similar to the steps S207, S208, S221, S223 and S225 shown in FIG. 2, and therefore will not be described in detail.

Meanwhile, in FIGS. 2 and 3, the case of requesting a split payment using the first user terminal 101 has been described, but it is not limited thereto in the present invention. According to another example of the present invention, after generating the split payment information in the first user terminal 101, the user may contact (or approach within a predetermined distance) the payment terminal 200 with a physical card (such as a credit card, prepaid charge card, etc.) instead of the first user terminal 101 to request a split payment.

In addition, the case of generating the split payment information each time for split payment has been described, but it is not limited thereto in the present invention. According to another example of the present invention, it is possible to set so that all payments are performed as split payment during a group travel period (e.g., a week, month, or the specified dates), and even if split payment information is not generated for each payment during the corresponding period, perform split payments based on the previously generated and saved split payment information.

FIG. 4A is a block diagram for describing a method of generating payment approval information according to an embodiment of the present invention, and FIG. 4B is a block diagram for describing a method of generating payment approval information according to another embodiment of the present invention.

Referring to FIGS. 4A and 4B, the payment service server according to an embodiment of the present invention may generate payment approval information for split payment. For example, as shown in FIG. 4A, when a split payment for a single payment is requested (S401), the payment service server may generate sub-payment information for each split payment based on the split payment information (S402-1, S402-2), and withdraw (or charge) the amount corresponding to the generated sub-payment information (S402-1, S402-2) from each electronic device (S403-1, S403-2) to complete the split payment (S404-1, S404-2), and respectively generate payment approval information for each sub-payment information. As such, when generating sub-payment information for each group member, if a specific group member wishes to cancel his or her payment (or change the payment card (or payment method)), only the corresponding sub-payment may be canceled without paying again after canceling the entire payment, such that the convenience for the affiliate and user can be improved.

As another example, as shown in FIG. 4B, when a split payment for a single payment is requested (S411), the payment service server may generate single payment information for split payment (S412), and withdraw (or charge) the corresponding split payment amount from the electronic device and one or more other electronic devices based on the generated split payment information (S413-1, S413-2) to complete the split payment (S414), and generate payment approval information for the single payment information. That is, although the case shown in FIG. 4B is the split payment, it may be processed as the single payment in terms of the payment terminal 200.

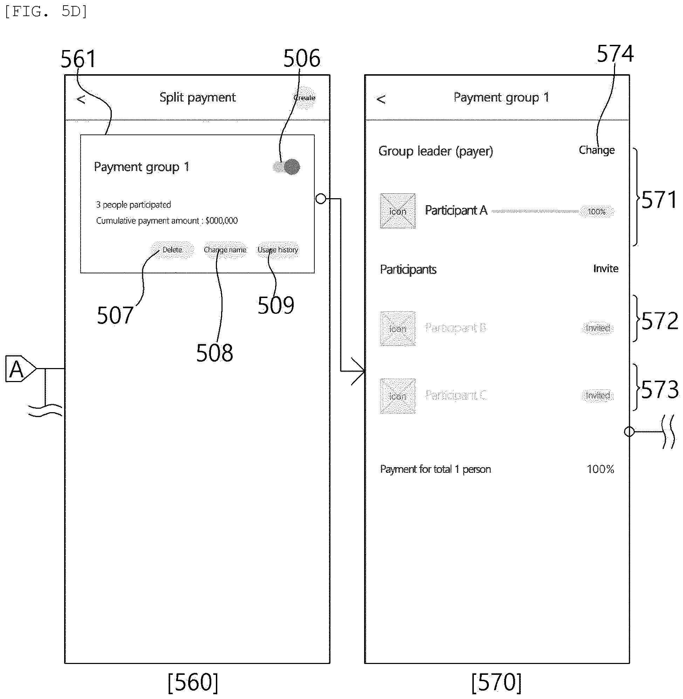

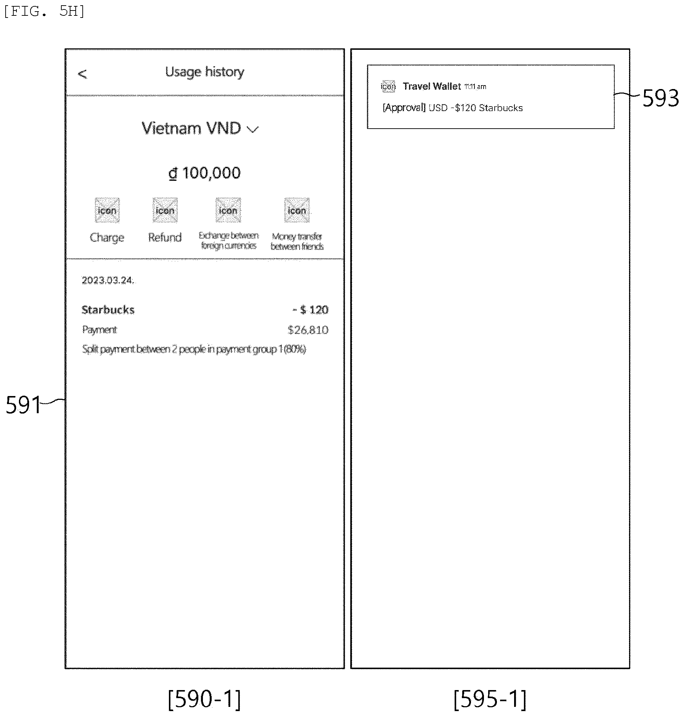

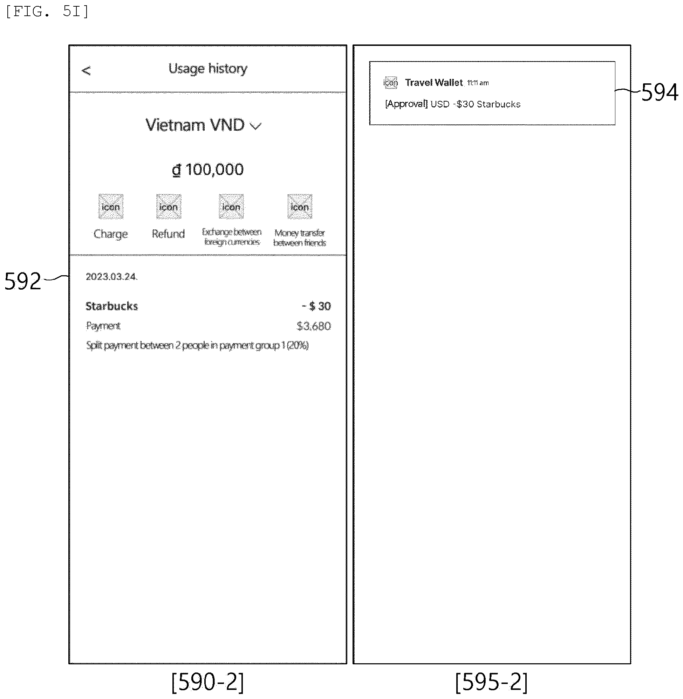

FIGS. 5A to 5C are exemplary diagrams of screens for creating a split payment group according to an embodiment of the present invention, FIGS. 5D to 5G are exemplary diagrams of screens for setting a split payment amount according to an embodiment of the present invention, and FIGS. 5H and 5I are exemplary diagrams of screens for notifying a split payment history according to an embodiment of the present invention.

Referring to FIGS. 5A to 5I, when a split payment menu is executed in the payment service application, an electronic device (e.g., the first user terminal) according to an embodiment of the present invention may display a payment group list screen, as shown in the drawing of reference numeral 510. The drawing of reference numeral 510 shows an example in which no payment group has already been created.

When a creation menu 501 for creating a payment group is selected (e.g., touched) on the payment group list screen, the electronic device may display a payment group creation screen, as shown in the drawing of reference numeral 520. The payment group creation screen may include a group name field 521 to set (e.g., input) a group name, a group type field 522 to set (e.g., select) a group type (e.g., one-time group or multi-time group), and a participant list field 523 to display a list of group members. In this case, the participant list field 523 may basically include a user of the electronic device (e.g., Participant A (me)).

When an invitation menu 502 for inviting a group member is selected (e.g., touched) on the payment group creation screen, the electronic device may display an invitation screen, as shown in the drawing of reference numeral 530. The invitation screen may include at least one group member field 531 including a name and contact information (e.g., phone number) of the group member. For example, the user of the electronic device may add a group member (e.g., Participant B) by directly inputting the name and contact information of a user to be invited in the group member field 531. Alternatively, the user of the electronic device may add a group member (e.g., Participant B) by selecting specific contact information from the pre-stored contact information.

Meanwhile, the invitation screen may include an additional menu 503 for adding group members. When the additional menu 503 is selected (e.g., touched), the electronic device may add a group member field 532, as shown in the drawing of reference numeral 540. In this case, the user of the electronic device may add a group member (e.g., Participant C) to the added group member field 532.

When a check menu 504 to complete the group setting is selected (e.g., touched) on the invitation screen, as shown in the drawing of reference numeral 550, the electronic device may display a payment group creation screen in which group members (e.g., Participant B and Participant C) for performing the split payment are added to the invitation list 523.

When a check menu 505 is selected (e.g., touched) on the payment group creation screen, as shown in the drawing of reference numeral 560, the electronic device may display a payment group list screen to which the created payment group (e.g., Payment group 1) is added. The payment group list screen of reference numeral 560 may display the created payment group in the form of a card (hereinafter, a payment group card) 561. The payment group card 561 may include an on/off menu 506 to activate or deactivate the corresponding card, a delete menu 507 for deleting the corresponding card, a name change menu 508 for changing the name of the corresponding payment group, and a usage history menu 509 for checking a usage history of the corresponding payment group.

Meanwhile, when the check menu 505 is selected (e.g., touched) on the payment group creation screen, the electronic device may transmit an invitation message to group members (e.g., Participant B and Participant C) included in the payment group. In this case, another electronic device (e.g., an electronic device of Participant C) that has received the invitation message from the electronic device may display a pop-up message 562, as shown in the drawing of reference numeral 565.

When the payment group card 561 is selected on the payment group list screen of reference numeral 560, the electronic device may display a payment amount setting screen to set the payment amount for each group member, as shown in the drawing of reference numeral 570. The payment amount setting screen may include amount setting fields 571, 572 and 573 for setting a split payment amount for each group member, and a representative change menu 574 to change the representative who sets the split payment information. In this case, the electronic device may activate only the amount setting field of the group member who approved the invitation on the payment amount setting screen. For example, as shown in the drawing of reference numeral 570, since the approval message is not received from the electronic devices of the invited group members (e.g., Participant B and Participant C), the electronic device may display only an amount setting field 571 of its own (e.g., Participant A) with being activated, and display amount setting fields 572 and 573 of the invited group members (e.g., Participant B and Participant C) with being deactivated.

Meanwhile, when the pop-up message 562 in the drawing of reference numeral 565 is selected, as shown in the drawing of reference numeral 575, another electronic device may display a split payment group list screen including an invitation card 576 on which detailed information of the invitation message is displayed. The invitation card 576 may include a rejection menu 511 and an approval menu 512 for the invitation. When the rejection menu 511 is selected, the other electronic device may transmit a rejection message for the invitation to the electronic device, and delete the invitation card 576. Meanwhile, when the approval menu 512 is selected, the other electronic device may transmit an approval message for the invitation to the electronic device, and change the invitation card 576 to a payment group card 578, as shown in the drawing of reference numeral 577. The payment group card 578 may include an exit menu 513 to withdraw from the payment group and a usage history menu 514 to check the payment history. Meanwhile, the approval message may include payment means information if the group member has not specified the default payment means (such as a credit card, prepaid charge card, account, etc.) for making a payment, or if the group member has requested a change in the payment means.

Meanwhile, when an approval message is received from at least some of the invited group members (e.g., Participant B and Participant C), as shown in the drawing of reference numeral 580, the electronic device may activate an amount setting field 573 of a group member (e.g., Participant C) who approved the invitation on the payment amount setting screen. The user of the electronic device may set the payment rate for each group member using a bar in the amount setting field. For example, the user of the electronic device may set the payment rate so that Participant A (me) pays 80% and Participant C pays 20%. When setting the payment rate for a group member is completed, the electronic device may transmit the set payment rate to the group member electronic device.

After receiving the payment rate from the electronic device, if the payment group card 578 is selected in the drawing of reference numeral 577, as shown in the drawing of reference numeral 585, another electronic device (e.g., an electronic device of Participant C) may display the payment amount setting screen. The payment amount setting screen of reference numeral 585 may be the same as the payment amount setting screen of the electronic device shown in the drawing of reference numeral 580. Meanwhile, the drawing of reference numeral 585 shows in a state where the amount setting field is activated so that a user of the other electronic device (e.g., Participant C) may change the split payment rate. That is, the user of the other electronic device (e.g., Participant C) may change the payment rate using the amount setting field. In this case, the other electronic device may transmit the changed payment rate to the electronic device. That is, a final payment rate may be determined through a consultation process among the above-described group members. According to another example, another electronic device may display the amount setting field in a deactivated state to prevent the user of the other electronic device from changing the split payment rate set by the user of the electronic device. In this case, the other electronic device may transmit the user's determination of the other electronic device on whether to approve the payment rate to the electronic device. According to another example, when generating a split payment, the user of the electronic device may set the split payment rate to be changeable or unchangeable on the other electronic device side.

When the generation of the split payment information is completed through the above-described processes, the electronic device may request a split payment to the payment service server 300 through the payment terminal 200. In response to the split payment request, the payment service server 300 may check whether the split payment is possible, and if the split payment is possible, perform the split payment. When the split payment is completed, the payment service server 300 may generate a split payment approval history and transmit the generated split payment approval history to the electronic device and the other electronic devices. For example, as shown in the drawings of reference numerals 590-1 and 590-2, the payment service server 300 may generate a first split payment approval history 591 related to the electronic device and a second split payment approval history 592 related to another electronic device (e.g., the electronic device of Participant C).

The electronic device that has received the first split payment approval history 591 may display a first pop-up message 593 on one side of a display, as shown in the drawing of reference numeral 595-1. Similarly, the other electronic device that has received the second split payment approval history 592 may display a second pop-up message 594 on one side of the display, as shown in the drawing of reference numeral 595-2.

Meanwhile, although it has been described above as setting the payment rate, according to another embodiment, the user of the electronic device may input the split payment amount for each group member rather than the payment rate. In this case, the electronic device may display a sum of the input split payment amounts. The user of the electronic device may check whether the displayed sum is the same as the actual total payment amount.

As another example, the electronic device may acquire the total payment amount from the user or the payment terminal 200, and compare the acquired total payment amount with the sum of the split payment amounts input through the amount setting fields.

As another example, the user of the electronic device may input the split payment amount for each group member by combining the payment rate and payment amount. For example, the user of the electronic device may input a split payment amount for at least one group member, set a payment rate for the remaining group members, and allow the remaining group members to pay the remaining amount according to the set payment rate.

As described above, the present invention is described with reference to the embodiments illustrated in the drawings, but these embodiments are merely illustrative examples, and those skilled art to which the present invention pertains will clearly appreciate that various modifications, variations, and equivalent other embodiments are possible without departing from the gist and scope of the present invention. Therefore, the true scope of technical protection of the present invention should be determined by the technical idea of the appended claims.

## Claims

1. A method for performing a split payment in a payment system, the method comprising:
generating, by an electronic device, split payment information for splitting a single payment amount with one or more other electronic devices to make a payment;
transmitting, by the electronic device, the split payment information to a payment service server configured to provide a payment service;
receiving, by the payment service server, a payment request;
checking, by the payment service server, whether the received payment request is a split payment request;
when the received payment request is the split payment request, checking, by the payment service server, whether the split payment is possible; and
if the split payment is possible, performing the split payment by the payment service server based on the split payment information, and when the split payment is completed, respectively transmitting, by the payment service server, a notification about completion of the split payment to the electronic device and the one or more other electronic devices,
wherein, the method further comprises, if the split payment is not possible, by the payment service server, notifying the electronic device of impossibility of the split payment, and transmitting a notification about the payment impossibility state and a reason for the impossibility to at least one electronic device which is unable to make the split payment, and
wherein the step of performing a split payment comprises:
generating single payment information for the split payment; and
based on the split payment information, withdrawing or charging the corresponding payment amount from each electronic device to complete the split payment, and generating payment approval information for the single payment information.

2. The method according to claim 1, further comprising creating, by the electronic device, a split payment group by inviting the one or more other electronic devices which will perform the split payment,
wherein the step of generating split payment information comprises respectively setting a payment rate or a payment amount for each group member included in the split payment group.

3. The method according to claim 2, wherein the step of generating split payment information comprises:
checking, by the electronic device, whether the split payment information is approved by the one or more other electronic devices; and
when all of the one or more other electronic devices approve the split payment, determining the split payment information by the electronic device.

4. The method according to claim 3, further comprising requesting, by the one or more other electronic devices, for the electronic device to adjust the payment rate or the payment amount.

5. A method for performing a split payment in a payment system, the method comprising:
generating, by an electronic device, split payment information for splitting a single payment amount with one or more other electronic devices to make a payment;
transmitting, by the electronic device, the split payment information to a payment service server configured to provide a payment service;
receiving a payment request by a payment terminal;
transmitting the payment request to the payment service server by the payment terminal;
checking whether the received payment request is a split payment request by the payment service server;
when the received payment request is the split payment request, checking whether the split payment is possible by the payment service server;
if the split payment is possible, performing the split payment by the payment service server based on the split payment information, and when the split payment is completed, respectively transmitting, by the payment service server, a notification about completion of the split payment to the electronic device and the one or more other electronic devices; and
if the split payment is not possible, by the payment service server, notifying the electronic device of impossibility of the split payment, and transmitting a notification about the payment impossibility state and a reason for the impossibility to at least one electronic device which is unable to make the split payment,
wherein, the step of, if the split payment is possible, performing the split payment by the payment service server based on the split payment information comprises:
generating single payment information for the split payment; and
based on the split payment information, withdrawing or charging the corresponding payment amount from each electronic device to complete the split payment, and generating payment approval information for the single payment information.

6. A method for performing a split payment in a payment system, the method comprising:
generating, by an electronic device, split payment information for splitting a single payment amount with one or more other electronic devices to make a payment;
transmitting, by the electronic device, the split payment information to a payment service server configured to provide a payment service;
checking whether the split payment is possible by the payment service server in response to receiving the split payment information;
if the split payment is possible, notifying the electronic device of performance of the split payment by the payment service server;
receiving a payment request by the payment service server;
checking whether the received payment request is a split payment request by the payment service server;
when the received payment request is the split payment request, performing the split payment by the payment service server based on the split payment information; and
when the split payment is completed, respectively transmitting, by the payment service server, a notification about completion of the split payment to the electronic device and the one or more other electronic devices,
wherein, the method further comprises, if the split payment is not possible, by the payment service server, notifying the electronic device of impossibility of the split payment, and transmitting a notification about the payment impossibility state and a reason for the impossibility to at least one electronic device which is unable to make the split payment,
wherein the step of performing a split payment comprises:
generating single payment information for the split payment; and
based on the split payment information, withdrawing or charging the corresponding payment amount from each electronic device to complete the split payment, and generating payment approval information for the single payment information.

7. A payment system for supporting a split payment, the system comprising:
an electronic device configured to generate split payment information for splitting a single payment amount with one or more other electronic devices to make a payment; and
a payment service server configured to: in response to receiving a payment request from the electronic device, check whether the received payment request is a split payment request; when the received payment request is the split payment request, check whether the requested split payment is possible; if the split payment is possible, perform the requested split payment based on the split payment information; and when the split payment is completed, transmit a notification about completion of the split payment to the electronic device and the one or more other electronic devices,
wherein, if the split payment is not possible, the payment service server notifies the electronic device of impossibility of the split payment, and transmits a notification about the payment impossibility state and a reason for the impossibility to at least one electronic device which is unable to make the split payment, and
the payment service server further generates single payment information for the split payment, withdraws or charges the corresponding payment amount from each electronic device to complete the split payment based on the split payment information, and generates payment approval information for the single payment information.

8. The system according to claim 7, wherein the electronic device creates a split payment group by inviting the one or more other electronic devices which will perform the split payment, and respectively sets a payment rate or a payment amount for each group member included in the split payment group to generate the split payment information.

9. The system according to claim 8, wherein the electronic device inquires the one or more other electronic devices whether to approve the split payment information, and when all of the one or more other electronic devices approve the split payment, determines the split payment information.

10. The system according to claim 9, wherein the one or more other electronic devices request for the electronic device to adjust the payment rate or the payment amount.
